# EUROPÄISCHE PATENTSCHRIFT

(11) **EP 3 466 260 B1**
(45) Veröffentlichungstag und Bekanntmachung des Hinweises auf die Patenterteilung: **04.03.2020**
(21) Anmeldenummer: 18198331.3
(22) Anmeldetag: 02.10.2018
(51) Int. Cl.: A01M 29/10, A01M 29/16, A01M 29/24, A01M 31/00, A01M 29/12, A01M 29/18

(54) **HERDENSCHUTZEINRICHTUNG**
HERD PROTECTION DEVICE
DISPOSITIF DE PROTECTION DES TROUPEAUX

(30) Priorität: 09.10.2017 DE 102017123382
(43) Veröffentlichungstag der Anmeldung: 10.04.2019
(73) Patentinhaber: Universität Kassel, 34125 Kassel (DE)
(72) Erfinder: Richter, Uwe, 37213 Witzenhausen (DE)
(74) Vertreter: Schneider, Peter Christian

(56) Entgegenhaltungen:
- WO-A1-2011/083436
- US-A- 5 243 327
- US-A1- 2010 277 720

## Beschreibung

### Gebiet der Erfindung

Die Erfindung betrifft eine Herdenschutzeinrichtung zum Schutz einer in einem Schutzgebiet befindlichen, eine Mehrzahl von Herdenmitgliedern aufweisenden Herde, umfassend
- wenigstens einen Sensor, mittels dessen eine durch Bewegung wenigstens eines Herdenmitgliedes hervorgerufene Schwingung erfassbar und ein entsprechendes Sensorsignals erzeugbar ist,
- eine signalübertragend mit dem Sensor verbundene Datenverarbeitungseinrichtung, mittels derer das Sensorsignal in eine Mehrzahl von Kategorien kategorisierbar ist, von denen wenigstens eine einen Normalzustand und wenigstens eine andere einen Alarmiertheitszustand repräsentiert,
- signalübertragend mit der Datenverarbeitungseinrichtung verbundene Vergrämungsmittel, mittels derer Vergrämungsmaßnahmen gegen sich dem Schutzgebiet nähernde Herden-Gefährder durchführbar sind,
wobei die Datenverarbeitungseinrichtung eingerichtet ist, die Vergrämungsmittel zur Durchführung der Vergrämungsmaßnahmen anzusteuern, sobald sie ein aktuelles Sensorsignal in der dem Alarmiertheitszustand zugeordneten Kategorie kategorisiert hat.

### Stand der Technik

Derartige Herdenschutzeinrichtungen sind bekannt aus der WO 2011/083 436 A1. Übergriffe von Raubtieren auf Nutztiere, insbesondere von Wölfen auf Schafe, stellen ein zunehmendes Problem in der Landwirtschaft dar. Aus politischen Gründen ist die Jagd auf solche Herden-Gefährder nur in sehr eingeschränktem Umfang möglich. Insbesondere werden artenschutzrechtliche Bedenken erhoben. Unter tierschutzrechtlichen Aspekten dürfen jedoch auch die Belange der Herdenmitglieder nicht vernachlässigt werden. Insbesondere Wölfe neigen dazu, in Schafherden, die durch eine Begrenzung, wie bspw. ein mobiles Weidezaunsystem, an der Flucht gehindert sind, eine das eigentliche Nahrungsbedürfnis weit übersteigende Anzahl von Tieren zu reißen oder schwer zu verletzen. Die grundsätzlich möglichen, rein passiv-konstruktiven Maßnahmen, die an Begrenzungssystemen eines definierten Herdenschutzgebietes vorgenommen werden können, bspw. nicht überspring- und nicht untergrabbare Zäune, sind technisch und unter Kostenaspekten extrem aufwändig und insbesondere für die Wanderschäferei nicht praktikabel.

Aus der o. g., gattungsbildenden Druckschrift ist ein System bekannt, bei dem jedes Herdenmitglied ein spezielles, mit Bewegungssensoren versehenes Halsband trägt. Eine ebenfalls in dem Halsband angeordnete Datenverarbeitungseinrichtung analysiert das kontinuierlich aufgenommene Bewegungsmuster und kategorisiert es in eine von mehreren vorgegebenen Bewegungsmuster-Kategorien. Diese Kategorisierung erfolgt durch Vergleich mit in einem Speicher der Datenverarbeitungseinrichtung hinterlegten Referenz-Mustern, die das arttypische Bewegungsverhalten in unterschiedlichen Gemütszuständen repräsentieren. Die spezielle Form der Referenzmuster hängt selbstverständlich von der Tierart, ggf. den Geländebedingungen des Schutzgebietes etc. ab und sind vom Fachmann vorab, bspw. experimentell, zu ermitteln. Wenigstens eines der Referenzmuster, d. h. wenigstens eine der Kategorien, in denen das jeweils aktuelle Bewegungsmuster kategorisiert werden kann, repräsentiert einen Normalzustand des Halsband-Trägers, wenigstens eine andere Kategorie repräsentiert seinen Alarmiertheitszustand, der auf das individuelle Empfinden einer Bedrohung durch einen Herden-Gefährder, bspw. durch einen Wolf, schließen lässt. Sobald ein aktuelles Bewegungsmuster in die den Alarmiertheitszustand repräsentierenden Kategorie kategorisiert wird, was ggf. eine Prüfung einer Mindestdauer eines bestimmten Bewegungsmuster beinhalten kann, aktiviert die Datenverarbeitungseinrichtung Vergrämungsmittel, die ebenfalls im Halsband integriert sind. Insbesondere handelt es sich dabei um hell blinkende LEDs und laute Ultraschall-Lautsprecher, deren Emissionen sich nähernde Herden-Gefährder abschrecken sollen. Die Emissionen sollen gemäß Angaben der genannten Druckschrift dabei möglichst so gewählt werden, dass der Träger des aktivierten Halsbandes, der diesen Emissionen in besonderer Nähe ausgesetzt ist, von Ihnen möglichst unbeeinflusst bleibt. Zugleich sind die Halsbänder anderer, in der Nähe befindlicher Herdenmitglieder per Funk miteinander verbunden, sodass auch deren Vergrämungsmittel aktiviert werden können, obgleich die zugeordneten Messwerteeinrichtungen noch keinen individuellen Alarmiertheitszustand erkannt haben.

Nachteilig bei dem bekannten System ist der hohe Kostenaufwand, der mit der individuellen Ausstattung jedes Herdenmitgliedes mit einem den Sensor, die Datenverarbeitungseinrichtung und die Vergrämungsmittel tragenden Halsbands verbunden ist. Ein sinnvoller Einsatzbereich für ein solches System sind daher insbesondere Herden, deren Herdenmitglieder in geringer Dichte über ein nicht umzäuntes, sehr weitläufiges Schutzgebiet verteilt sind. Hier ist das Eindringen von Herden-Gefährdern in das Schutzgebiet ohnehin nicht zu vermeiden, weshalb auf einen individuellen Schutz der Herdenmitglieder abgestellt werden muss.

Vergleichbare Konzepte werden in der FR 2 882 225 A1, der CN 104 663 498 A, der US 4 876 674 A und der ES 2 582 341 AA verfolgt.

Aus der US 2001/032 598 AA ist ein System bekannt, um Haustiere, insbesondere Hunde, daran zu hindern, in für sie gesperrte Wohnungsbereiche einzudringen. Hierbei trägt das Tier ein mit gegen es selbst gerichteten Vergrämungsmitteln ausgestattetes Halsband, welches aktiviert wird, sobald sich das Tier einer durch einen verlegten Draht definierten Grenze nähert. Übertragen auf ein Herdenschutzsystem würde dies die Ausstattung der Herden-Gefährder mit derartigen Halsbändern bedeuten, was offensichtlich nicht praktikabel ist.

Aus der US 5 243 327 A ist ein akustischer Niederfrequenz-Sensor bekannt, der, angebracht an für Haustiere gesperrten Wohnungsbereichen oder Einrichtungsgegenständen die durch Annäherung der Tiere verursachten, niederfrequenten Körperschall-Signale detektiert und lokale Vergrämungsmaßnahmen aktiviert. Auf Grund der Vielzahl von Schwingungen im fraglichen Frequenzbereich in der freien Natur ist ein solches System ausschließlich für den Gebrauch in geschlossenen Wohnungen geeignet.

### Aufgabenstellung

Es ist die Aufgabe der vorliegenden Erfindung, ein konstruktiv einfaches und wenig kostenintensives Herdenschutzsystem zur Verfügung zu stellen, insbesondere für Herden, deren Herdenmitglieder sich in hoher Dichte in einem durch konstruktive Maßnahmen räumlich begrenzten Schutzgebiet befinden.

### Darlegung der Erfindung

Diese Aufgabe wird in Verbindung mit den Merkmalen des Oberbegriffs von Anspruch 1 dadurch gelöst, dass der Sensor als ein körperschallübertragend mit dem Boden des Schutzgebiet verbindbares Bodenschallmikrofon ausgebildet ist. Bevorzugte Ausführungsformen der Erfindung sind Gegenstand der abhängigen Patentansprüche.

Bevorzugte Ausführungsformen sind Gegenstand der abhängigen Ansprüche.

Anders als alle bekannten Systeme stellt die Erfindung nicht auf die Erfassung der individuellen Bewegungen jedes einzelnen Herdenmitgliedes oder jedes einzelnen Herden-Gefährders ab. Kern der Erfindung ist vielmehr die Erfassung und Kategorisierung eines von der Herde als solcher verursachten Signals. So hat der Erfinder festgestellt, dass bspw. Schafe im Normalzustand ruhig grasend mit gemächlichen Schritten einherschreiten. Im Alarmiertheitszustand hingegen drängt die Herde mit schnellen Trippelschritten zusammen, wobei jedes Individuum versucht, vom Rand in die Mitte des sich bildenden Pulks zu gelangen. Entsprechend deutlich unterscheidbar ist das Bodenschallsignal, welches die gesamte Herde aussendet. Durch das Aufschlagen der harten Hufe auf dem Boden ist dieses Bodenschallsignal zudem sehr gut und über weite Strecken detektierbar. Selbst in der Nähe von Straßen, auf denen schwere Lastkraftwagen ein vergleichbar lautes Bodenschallsignal verursachen mögen, lässt sich das hier interessierende, von der Herde verursachte Bodenschallsignal auf Grund seines Musters und seiner Dauer deutlich unterscheiden. Bei anderen auf Weiden oder in Gattern gehaltenen Herdentierarten, bspw. bei Rindern, Pferden, Damwild oder Geflügel, ergeben sich zwar andere artspezifische Verhaltens- und Bewegungsmuster, die bei der jeweiligen Definition der Zustands- bzw. Bewegungsmusterkategorien zu berücksichtigen sind; auch hier erzeugen die Herden jedoch deutlich wahrnehmbare Bodenschallsignale, deren spezielle Signalmuster mit hoher Zuverlässigkeit auf den jeweiligen Gemütszustand der Herde schließen lassen.

Diese Zusammenhänge macht sich die Erfindung insofern zunutze, als der Sensor als ein Bodenschallmikrofon ausgebildet ist, das zur Aufnahme des oben erläuterten Bodenschallsignals in den Körperschall übertragender Weise mit dem Boden des Schutzgebiets verbunden ist. Bodenschallmikrofone sind handelsübliche Gerätschaften, die bspw. auch von Wasserversorgern zur Detektion vergrabener Leitungen routinemäßig eingesetzt werden. Ihr konkreter Aufbau ist daher dem Fachmann bekannt. Unterschiedliche Varianten sind gleichwertig einsetzbar. Auf Grund ihrer Robustheit besonders bevorzugt sind jedoch solche Bodenschallmikrofone, die einen piezoelektrischen Sensorkopf aufweisen.

Neben dem offensichtlichen Kostenvorteil gegenüber der Ausstattung jedes einzelnen Herdenmitgliedes mit einer individuellen Sensorik hat die Erfindung noch den zusätzlichen Vorteil, dass auch die Datenverarbeitungseinrichtung zentralisiert ausgebildet sein kann. Insbesondere kann ein gemeinsames Sensor- und Datenverarbeitungsmodul realisiert werden und/oder Sensor und/oder Datenverarbeitungseinrichtung können platzsparend und geschützt in ein Steuergerät eines elektrischen Weidezaunsystems integriert werden.

Auch die Vergrämungsmittel können vom Einzeltier unabhängig gestaltet werden. Bspw. kann eine zentrale Sirene, eine zentrale oder an den Grenzen des Schutzgebietes verteilte Lichtanlage, an den Grenzen des Schutzgebietes verteilte Duftsprühanlagen, etc. realisiert werden. Insbesondere im Fall der Integration der Datenverarbeitungseinrichtung in ein Steuergerät eines elektrischen Weidezaunsystems kann auch eine Erhöhung der Zaunspannung als Vergrämungsmittel eingesetzt werden. Dabei kann jeweils in Ansehung der Herden- und Gefährderspezies, der Geländesituation des konkreten Schutzgebietes etc. bedarfsgerecht optimiert vorgegangen werden.

Das erfindungsgemäß als Sensor eingesetzte Bodenschallmikrofon ist bevorzugt in ein Element einer Schutzgebietsbegrenzung integriert. Insbesondere kann vorgesehen sein, dass das Bodenschallmikrofon in einen Zaunpfahl integriert ist. Jeder Zaunpfahl ist notwendig in den Boden an der Grenze des Schutzgebietes gerammt und steht so in direktem Kontakt mit dem Boden des Schutzgebietes. Dort erzeugter Bodenschall wird also unmittelbar zum Sensor übertragen. Alternativ ist es selbstverständlich auch möglich, bspw. an zentraler Stelle im Schutzgebiet oder außerhalb davon in der Nähe seiner Begrenzung ein erfindungsgemäßes Bodenschallmikrofon zu installieren. Erfindungswesentlich ist lediglich die körperschallübertragende Verbindung zwischen dem Bodenschallmikrofon und dem Boden des Schutzgebietes, auf dem die Füße der Herdenmitglieder das zu kategorisierende Bodenschallsignal erzeugen.

Als besonders vorteilhaft wird angesehen, wenn der Zaunpfahl, in welchen das Bodenschallmikrofon integriert ist, Bestandteil eines mobilen Weidezaunsystems ist. Selbstverständlich ist die Erfindung auch auf stationäre Weidezaunsysteme anwendbar. Diese lassen sich jedoch ggf. in wirtschaftlich sinnvollem Rahmen anderweitig wolfssicher gestalten. Bei mobilen Weidezaunsystemen, wie sie insbesondere in der Wanderschäferei Einsatz finden, sind derartige Alternativmaßnahmen nicht wirtschaftlich realisierbar. Ein Weidezaunpfahl mit einer in den Boden des Schutzgebietes einrammbaren Spitze, die körperschallübertragend mit einem Bodenschallmikrofon verbunden ist, ist also ein eigenständig wertvoller Bestandteil einer besonders bevorzugten Ausführungsform der vorliegenden Erfindung.

Zusammen mit dem Bodenschallmikrofon kann auch die Datenverarbeitungseinrichtung in den Zaunpfahl integriert sein. Alternativ, d. h. bei einer vom Zaunpfahl separaten Anordnung der der Datenverarbeitungseinrichtung, muss jedoch zumindest eine signalübertragende Verbindung vom Bodenschallmikrofon zur Datenverarbeitungseinrichtung bestehen. Diese kann drahtlos oder leitungsgebunden realisiert sein.

Alternativ oder zusätzlich können die Vergrämungsmittel in besagten Zaunpfahl integriert sein. Sie sind - unabhängig von ihrer Position - bevorzugt optischer und/oder akustischer und/oder olfaktorischer Natur.

Bei einer alternativen, oben bereits angedeuteten Ausgestaltung der Erfindung kann die Datenverarbeitungseinrichtung in ein Steuergerät eines elektrischen Weidezaunsystems integriert sein. Ein solches Steuergerät umfasst typischerweise auch eine elektrische Energieversorgungseinheit, insbesondere einer Batterie, und ist in einem wasserdicht geschützten und vom Herdenbesitzer regelmäßig gewarteten, häufig tragbaren Kasten angeordnet. Hier können bspw. die Signale mehrerer im Schutzgebiet verteilter Bodenschallmikrofone gesammelt und gemeinsam ausgewertet werden. Selbstverständlich ist es auch möglich, eine derartige Zentraleinheit alternativ oder zusätzlich mit einem eigenen Bodenschallmikrofon auszustatten, welches bspw. mit einem ausfahrbaren Dorn in körperschallübertragendem Kontakt mit dem Boden des Schutzgebiets gebracht werden kann.

Insbesondere, jedoch nicht ausschließlich, bei einer derartigen Ausgestaltung der Erfindung kann vorgesehen sein, dass die Vergrämungsmittel Leistungssteigerungsmittel umfassen, mittels derer eine elektrische Leistung eines das Schutzgebiet begrenzenden elektrischen Weidezaunsystems steigerbar ist. Eine elektrische Spannung auf dem Weidezaunsystem dient typischerweise dazu, die Herdenmitglieder am Verlassen des Schutzgebietes zu hindern. Die elektrische Leistung ist entsprechend so dimensioniert, dass sie von den Herdenmitgliedern als unangenehm empfunden wird, ohne sie jedoch zu verschrecken oder gar zu verletzen. Denkbar ist es jedoch auch, die elektrische Ladung des Zaunsystems zur Abwehr von Herden-Gefährdern zu benutzen. Hier soll jedoch gezielt eine wenigstens verschreckende Wirkung erzielt werden. Diese Schutzmaßnahme muss jedoch nur temporär aktiviert werden, nämlich dann, wenn das Herdenverhalten die unmittelbare Gefahr eines Eindringens eines Herden-Gefährders signalisiert.

Auch andere Vergrämungsmittel, insbesondere akustische Vergrämungsmittel, wie z.B. eine Sirene oder ein Hundegebell abspielender Lautsprecher, können - wirkverbunden mit der Datenverarbeitungseinrichtung - in das Steuergerät integriert sein.

Günstigerweise ist die Datenverarbeitungseinrichtung mit Kommunikationsmitteln verbunden, die der Benachrichtigung einer Meldestelle über ein Mobilfunk-Netzwerk dienen, wenn die Datenverarbeitungseinrichtung ein aktuelles Sensorsignal in der dem Alarmiertheitszustand zugeordneten Kategorie kategorisiert und/oder die Vergrämungsmittel die Vergrämungsmaßnahmen durchführen. Mit anderen Worten kann ein Herdenbesitzer bei dieser Weiterentwicklung der Erfindung mittels SMS, Anruf, App oder auf andere Weise über ein Mobilfunknetz benachrichtigt werden, sobald die erfindungsgemäße Herdenschutzvorrichtung aktiviert wird. Dies gibt die Möglichkeit eines schnellen Eingreifens, falls die aktivierten Vergrämungsmittel nicht ausreichen sollten, um den Herden-Gefährder dauerhaft abzuschrecken.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine schematische Darstellung eines mit einer erfindungsgemäßen Herdenschutzeinrichtung ausgestatteten Schutzgebietes mit einer Herde im Normalzustand,
- Figur 2:: das Schutzgebiet von Figur 1 mit der Herde im Alarmiertheitszustand und
- Figur 3:: das Schutzgebiet der Figuren 1 und 2 nach Aktivierung der Vergrämungsmittel.

### Beschreibung bevorzugter Ausführungsformen

Gleich Bezugszeichen in den Figuren weisen auf gleiche oder analoge Elemente hin.

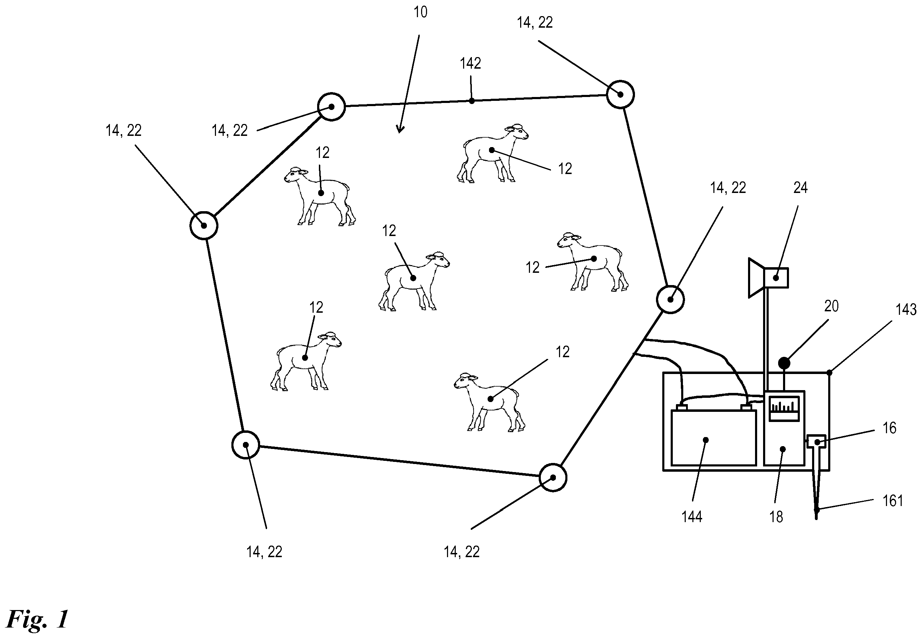

Figur 1 zeigt in stark schematisierter Darstellung ein Schutzgebiet 10 mit einer durch eine erfindungsgemäße Herdenschutzeinrichtung geschützten Herde, deren Herdenmitglieder 12 als Schafe dargestellt sind. Das Schutzgebiet 10 ist begrenzt durch ein mobiles Weidezaunsystem 14, umfassend in die Erde gerammte Zaunpfähle 141, ein zwischen den Zaunpfählen 141 gespanntes, elektrisch leitendes Netz 142 und ein Steuergerät 143, welches insbesondere eine elektrisch mit dem Netz 142 verbundene Batterie 144 umfasst. Insoweit entspricht die Anlage einem handelsüblichen Weidezaunsystem. Bei der in Figur 1 dargestellten Ausführungsform umfasst das Steuergerät 143 zusätzlich ein Bodenschallmikrofon 16, welches mittels einer in den Boden gerammten Spitze 161 körperschallübertragend mit dem Boden des Schutzgebietes 10 verbunden ist. Das Bodenschallmikrofon 16 steht in signalleitender Verbindung mit einer Datenverarbeitungseinrichtung 18, die bspw. als Mikrocomputer ausgebildet sein kann. Die zum Betrieb notwendige Spannungsversorgung des Bodenschallmikrofons 16 und der Datenverarbeitungseinrichtung 18, kann, wie in Figur 1 dargestellt, aus der Batterie 144 erfolgen.

Bei der gezeigten Ausführungsform ist die Datenverarbeitungseinrichtung 18 einen Mobilfunksender 20 gekoppelt, der in Figur 1 durch seine Sendeantenne illustriert ist.

Die in Figur 1 dargestellten Zaunpfähle 141 tragen jeweils eine Blitzleuchte 22, die über das elektrisch leitende Netz 142 von der Batterie 144 mit der notwendigen Betriebsspannung versorgt werden. Zugleich ist über denselben Leitungspfad eine Steuerleitung zur Datenverarbeitungseinrichtung 18, sodass der Betrieb der Blitzleuchten 22 von der Datenverarbeitungseinrichtung 18 gesteuert werden kann.

Weiter ist in Figur 1 ein zentrale Sirene 24 in Verbindung mit der Datenverarbeitungseinrichtung 18 dargestellt. Auch die Energieversorgung der Sirene 24 kann über die Batterie 144 erfolgen.

Figur 1 zeigt die Herde im Schutzgebiet 10 in ihrem Normalzustand, d. h. ohne eine äußere Bedrohung. Der von dem Schutzgebiet 10 ausgehende und durch die ruhige Wanderbewegung der Herdenmitglieder 12 verursachte Bodenschall zeigt ein charakteristisches Muster, wie sehr schematisiert in Form eines Monitor-Symbols an der Datenverarbeitungseinrichtung 18 von Figur 1 dargestellt.

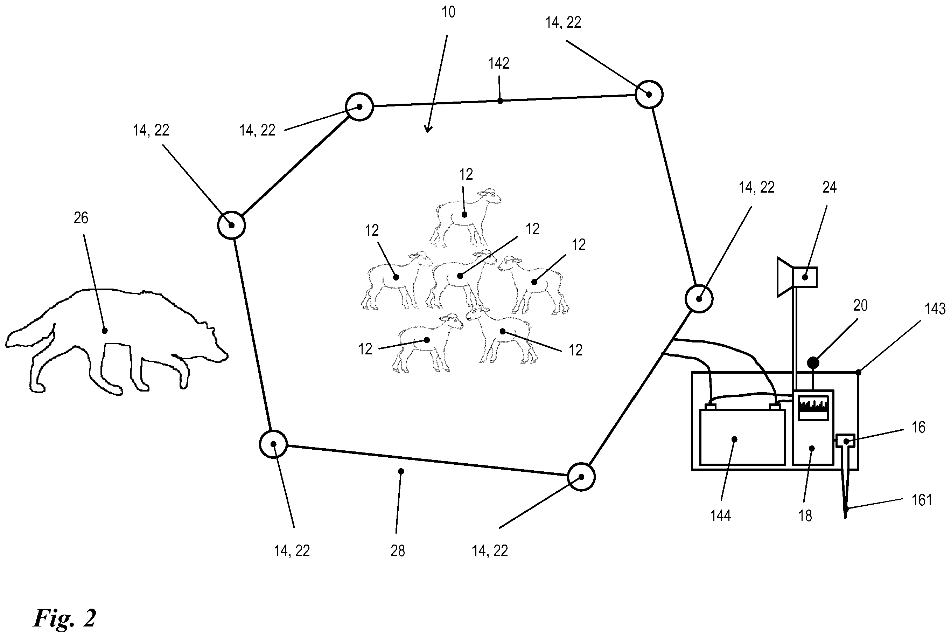

Figur 2 zeigt dasselbe Schutzgebiet bei Annährung eines Herden-Gefährders, der in Figur 2 als Wolf dargestellt ist. Die Herdenmitglieder 12 nehmen die sich nähernde Bedrohung wahr und ändern ihr Verhalten, welches insbesondere durch hektische Trippelschritte charakterisiert ist. In Figur 2 befindet sich die Herde aufgrund der äußeren Bedrohung in ihrem Alarmiertheitszustand. Der mittels des Bodenschallmikrofons 16 aufgenommene Bodenschall aus dem Schutzgebiet 10 zeigt daher ein von der vorherigen Situation deutlich verschiedenes Muster, was wiederum in sehr stark schematisierter Form als Monitor-Symbol an der Datenverarbeitungseinrichtung 18 illustriert ist.

Die Datenverarbeitungseinrichtung 18 ist eingerichtet, unterschiedliche Signalmuster zu erkennen und zu kategorisieren.

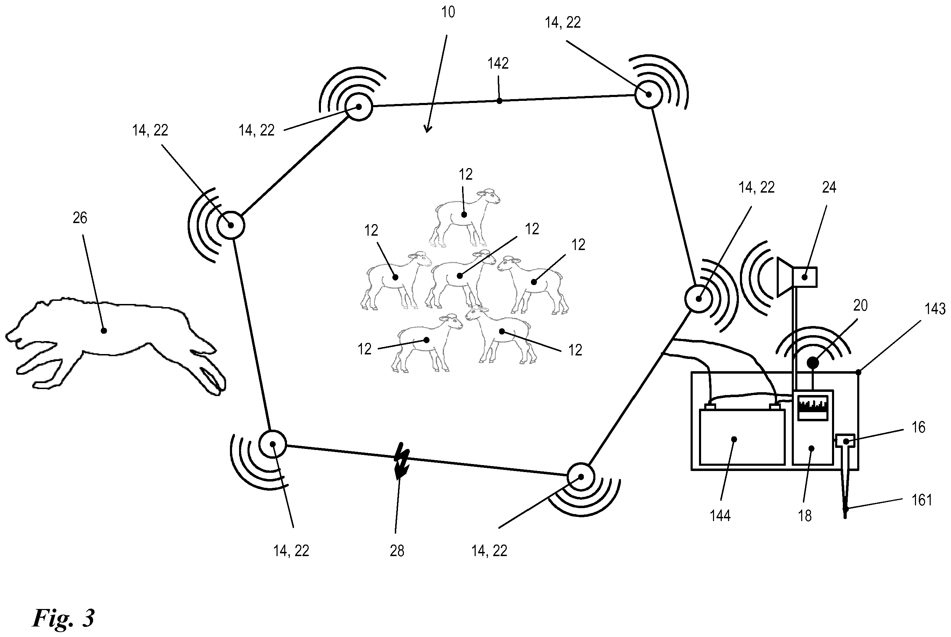

Sobald der in Figur 2 dargestellte Alarmiertheitszustand detektiert wird, werden, wie in Figur 3 dargestellt, Vergrämungsmittel aktiviert: Die Blitzleuchten 22 beginnen hell zu blitzen, die Sirene 24 sendet einen lauten Sirenenton aus. Zusätzlich ist bei der dargestellten Ausführungsform, wie durch den Elektropfeil 28 angedeutet, vorgesehen, die elektrische Leistung am Netz 142 deutlich zu erhöhen. Infolge dieser Vergrämungsmaßnahmen wird der Herden-Gefährder 26 die Flucht ergreifen. Dennoch wird bei der gezeigten Ausführungsform zugleich mit der Auslösung der Vergrämungsmaßnahmen vom Mobilfunksender ein Benachrichtigungssignal abgesetzt, um den Herdenbesitzer unverzüglich von dem Ereignis zu informieren.

Typischerweise werden die Vergrämungsmaßnahmen nach einer vorgegebenen Zeit eingestellt, um die Herdenmitglieder 12 nicht weiter zu beunruhigen und um zu verhindern, dass sich Herden-Gefährder 26 an diese Maßnahmen gewöhnen. Die Herde wird sodann allmählich in ihren Normalzustand (Figur 1) zurückkehren.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Insbesondere kann die zentrale oder dezentrale Verteilung der einzelnen Komponenten, wie Bodenschallmikrofon 16, Datenverarbeitungseinrichtung 18, Vergrämungsmittel 22, 24, 28 sowie deren jeweilige Verbindungs- und Versorgungsstrecken vom Fachmann in Ansehung der Erfordernisse des Einzelfalls eingerichtet werden.

### Bezugszeichenliste

- 10: Schutzgebiet
- 12: Herdenmitglied
- 14: Weidezaunsystem
- 141: Zaunpfahl
- 142: elektrisch leitendes Netz
- 143: Steuergerät
- 144: Batterie
- 16: Bodenschallmikrofon
- 161: Spitze
- 18: Datenverarbeitungseinrichtung
- 20: Mobilfunksender
- 22: Blitzleuchte
- 24: Sirene
- 26: Herden-Gefährder
- 28: Elektropfeil

## Patentansprüche

1. Herdenschutzeinrichtung zum Schutz einer in einem Schutzgebiet (10) befindlichen, eine Mehrzahl von Herdenmitgliedern (12) aufweisenden Herde, umfassend
- wenigstens einen Sensor (16), mittels dessen eine durch Bewegung wenigstens eines Herdenmitgliedes (12) hervorgerufene Schwingung erfassbar und ein entsprechendes Sensorsignals erzeugbar ist,
- eine signalübertragend mit dem Sensor (16) verbundene Datenverarbeitungseinrichtung (18), mittels derer das Sensorsignal in eine Mehrzahl von Kategorien kategorisierbar ist, von denen wenigstens eine einen Normalzustand und wenigstens eine andere einen Alarmiertheitszustand repräsentiert,
- signalübertragend mit der Datenverarbeitungseinrichtung (18) verbundene Vergrämungsmittel (22, 24, 28), mittels derer Vergrämungsmaßnahmen gegen sich dem Schutzgebiet (10) nähernde Herden-Gefährder (26) durchführbar sind,
wobei die Datenverarbeitungseinrichtung (18) eingerichtet ist, die Vergrämungsmittel (22, 24, 28) zur Durchführung der Vergrämungsmaßnahmen anzusteuern, sobald sie ein aktuelles Sensorsignal in der dem Alarmiertheitszustand zugeordneten Kategorie kategorisiert hat,
**dadurch gekennzeichnet,**
**dass** der Sensor als ein körperschallübertragend mit dem Boden des Schutzgebietes (10) verbindbares Bodenschallmikrofon (16) ausgebildet ist.

2. Herdenschutzeinrichtung nach Anspruch 1,
**dadurch gekennzeichnet,**
**dass** das Bodenschallmikrofon (16) in ein Element einer Schutzgebietsbegrenzung integriert ist.

3. Herdenschutzeinrichtung nach Anspruch 2
**dadurch gekennzeichnet,**
**dass** das Bodenschallmikrofon (16) in einen Zaunpfahl (141) integriert ist.

4. Herdenschutzeinrichtung nach Anspruch 3
**dadurch gekennzeichnet,**
**dass** der Zaunpfahl (141) Bestandteil eines mobilen Weidezaunsystems (14) ist.

5. Herdenschutzeinrichtung nach einem der vorangehenden Ansprüche,
**dadurch gekennzeichnet,**
**dass** das Bodenschallmikrofon (16) einen piezoelektrischen Sensorkopf aufweist.

6. Herdenschutzeinrichtung nach einem der vorangehenden Ansprüche,
**dadurch gekennzeichnet,**
**dass** die Vergrämungsmittel einen optischen (22) und/oder akustischen (24) und/oder olfaktorischen Signalgeber umfassen.

7. Herdenschutzeinrichtung nach einem der vorangehenden Ansprüche,
**dadurch gekennzeichnet,**
**dass** die Datenverarbeitungseinrichtung (18) in ein Steuergerät (143) eines elektrischen Weidezaunsystems (14) integriert ist.

8. Herdenschutzeinrichtung nach einem der vorangehenden Ansprüche,
**dadurch gekennzeichnet,**
**dass** die Vergrämungsmittel Leistungssteigerungsmittel umfassen, mittels derer eine elektrische Leistung (28) eines das Schutzgebiet (10) begrenzenden elektrischen Weidezaunsystems (14) steigerbar ist.

9. Herdenschutzeinrichtung nach einem der vorangehenden Ansprüche,
**gekennzeichnet durch**
signalübertragend mit der Datenverarbeitungseinrichtung (18) verbundene Kommunikationsmittel (20) zur Benachrichtigung einer Meldestelle über ein Mobilfunk-Netzwerk, wenn die Datenverarbeitungseinrichtung (18) ein aktuelles Sensorsignal in der dem Alarmiertheitszustand zugeordneten Kategorie kategorisiert und/oder die Vergrämungsmittel (22, 24, 28) die Vergrämungsmaßnahmen durchführen.

## Claims

1. A herd protection device for protecting a herd with a plurality of herd members (12) located within a protected area (10), comprising
- at least one sensor (16) by means of which a vibration caused by a movement of at least one herd member (12) is detectable and a corresponding sensor signal can be generated,
- a data processing device (18) connected in a signal-transmitting manner to the sensor (16) by means of which the sensor signal is categorizable in a plurality of categories, of which at least one represents a normal state and at least one other represents an alarm state,
- scaring means (22, 24, 28) connected in a signal-transmitting manner to the data processing device (18) by means of which scaring measures are executable against herd predators (26) approaching the protected area (10),
wherein the data processing device (18) is configured to activate the scaring means (22, 24, 28) to execute the scaring measures once the data processing device (18) has categorized a current sensor signal into the category associated with the alarm state,
**characterized in that**
the sensor is implemented as a ground microphone (16) capable of transmitting structure-borne sound, which ground microphone (16) can be connected to the ground of the protected area (10).

2. The herd protection device according to Claim 1,
**characterized in that**
the ground microphone (16) is integrated into an element of a protected area boundary.

3. The herd protection device according to Claim 2,
**characterized in that**
the ground microphone (16) is integrated into a fence post (141).

4. The herd protection device according to Claim 3,
**characterized in that**
the fence post (141) is a component of a mobile pasture fencing system (14).

5. A herd protection device according to any of the preceding claims,
**characterized in that**
the ground microphone (16) has a piezoelectric sensor head.

6. A herd protection device according to any of the preceding claims,
**characterized in that**
the scaring means comprise an optical (22) and/or acoustic (24) and/or olfactory signal generator.

7. A herd protection device according to any of the preceding claims,
**characterized in that**
the data processing device (18) is integrated into a control device (143) of an electric pasture fencing system (14).

8. A herd protection device according to any of the preceding claims,
**characterized in that**
the scaring means comprise power boosting means by means of which an electric power (28) of an electric pasture fencing system (14) circumscribing the protected area (10) can be increased.

9. A herd protection device according to any of the preceding claims,
**characterized by**
communication means (20) connected in a signal-transmitting manner to the data processing device (18) for notifying a reporting center via a mobile radio network if the data processing device (18) categorizes a current sensor signal into the category associated with the alarm state and/or the scaring means (22, 24, 28) execute the scaring measures.

## Revendications

1. Dispositif de protection de troupeau, destiné à protéger un troupeau composé de plusieurs membres du troupeau (12) se trouvant dans une zone de protection (10), comportant
- au moins un capteur (16) pouvant détecter une vibration provoquée par le mouvement d'au moins un membre du troupeau (12) et pouvant générer un signal de capteur correspondant,
- un dispositif de traitement de données (18) connecté au capteur (16) de manière à transmettre le signal, permettant de catégoriser le signal de capteur en une pluralité de catégories, dont au moins une représente un état normal et au moins une autre représente un état d'alarme,
- des moyens de répulsion (22, 24, 28) reliés au dispositif de traitement de données (18) de manière à transmettre le signal, destinés à prendre des mesures de répulsion contre des prédateurs de troupeaux (26) se rapprochant de la zone de protection (10),
le dispositif de traitement de données (18) étant conçu pour commander des moyens de répulsion (22, 24, 28) afin de prendre des mesures de répulsion dès qu'il a classé un signal de capteur actuel dans la catégorie associée à l'état d'alarme,
**caractérisé en ce**
**que** le capteur est réalisé sous la forme d'un microphone de sol (16) pouvant être relié au sol de la zone de protection (10) de manière à transmettre des bruits structurels.

2. Dispositif de protection de troupeau selon la revendication 1,
**caractérisé en ce**
**que** le microphone de sol (16) est intégré dans un élément d'une limite de la zone de protection.

3. Dispositif de protection de troupeau selon la revendication 2,
**caractérisé en ce**
**que** le microphone de sol (16) est intégré dans un poteau de clôture (141).

4. Dispositif de protection de troupeau selon la revendication 3,
**caractérisé en ce**
**que** le poteau de clôture (141) fait partie d'un système de clôture (14) mobile.

5. Dispositif de protection de troupeau selon l'une des revendications précédentes,
**caractérisé en ce**
**que** le microphone de sol (16) comporte une tête du capteur piézoélectrique.

6. Dispositif de protection de troupeau selon l'une des revendications précédentes,
**caractérisé en ce**
**que** les moyens de répulsion contiennent un transmetteur de signal optique (22) et/ou acoustique (24) et/ou olfactif.

7. Dispositif de protection de troupeau selon l'une des revendications précédentes,
**caractérisé en ce**
**que** le dispositif de traitement de données (18) est intégré dans un appareil de commande (143) d'un système de clôture (14) électrique.

8. Dispositif de protection de troupeau selon l'une des revendications précédentes,
**caractérisé en ce**
**que** les moyens de répulsion contiennent des moyens d'augmentation de performances, permettant d'augmenter une performance (28) électrique d'un système de clôture (14) électrique délimitant la zone de protection (10).

9. Dispositif de protection de troupeau selon l'une des revendications précédentes,
**caractérisé par**
des moyens de communication (20) connectés au dispositif de traitement de données (18) de manière à transmettre le signal pour avertir une centrale via un réseau de téléphonie mobile, lorsque le dispositif de traitement de données (18) classe un signal de capteur actuel dans la catégorie associée à l'état d'alarme et/ou les moyens de répulsion (22, 24, 28) appliquent les mesures de répulsion.
